# EUROPEAN PATENT APPLICATION

(11) **EP 2 330 434 A1**
(43) Date of publication of application: **08.06.2011**
(21) Application number: 09275071.0
(22) Date of filing: 07.09.2009
(51) Int. Cl.: G01S 5/00, G05D 1/02, B60W 30/08

(54) **Saftey system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

The present invention relates to a safety system for an autonomous ground vehicle. Specifically, the present invention deals with the need to provide a safety mechanism to avoid a autonomous ground vehicle operating at too high a speed in the proximity of human operators. Accordingly the present invention provides a method for avoiding collisions between a vehicle and personnel comprising the steps of: determining the locations of personnel within a predetermined range of said vehicle; determining the proximity to said vehicle of said personnel; applying a speed profile to said vehicle for reducing the speed of the vehicle or stopping the vehicle. Accordingly the present invention also provides a safety system for a vehicle comprising: a vehicle control system; and a safety system; wherein vehicle position data and personnel position data is provided to the safety system; and if the vehicle position data and personnel position data are determined by the safety system to indicate that said vehicle is in close proximity to personnel, the safety system applies a speed profile to the vehicle control system causing the vehicle to reduce speed or stop.

## Description

The present invention relates to a safety system for an autonomous ground vehicle. Specifically, the present invention deals with the need to provide a safety mechanism to avoid an autonomous ground vehicle operating at too high a speed in the proximity of human operators.

In a system operating primarily using satellite positioning there is a need to take into account the errors possible with the location data returned by the positioning satellites in the relative distances between vehicles and personnel.

Accordingly the present invention provides a method for avoiding collisions between a vehicle and personnel comprising the steps of: determining the locations of personnel within a predetermined range of said vehicle; determining the proximity to said vehicle of said personnel; applying a speed profile to said vehicle for reducing the speed of the vehicle or stopping the vehicle.

Accordingly the present invention also provides a safety system for a vehicle comprising: a vehicle control system; and a safety system; wherein vehicle position data and personnel position data is provided to the safety system; and if the vehicle position data and personnel position data are determined by the safety system to indicate that said vehicle is in close proximity to personnel, the safety system applies a speed profile to the vehicle control system causing the vehicle to reduce speed or stop.

The invention may be performed in various ways, and, by way of example only, embodiments thereof will now be described, reference being made to the accompanying drawings with like reference numerals in which:
Figure 1 is a drawing showing an illustration of a safety system in an autonomous vehicle; and
Figure 2 is a drawing showing the illustration of an example situation involving an autonomous vehicle and several personnel.

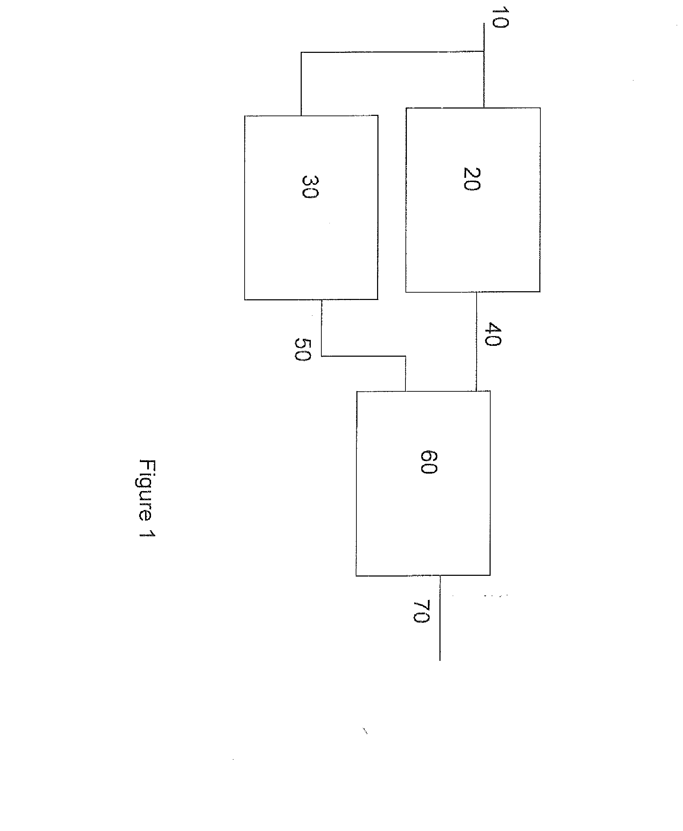

Referring now to Figure 1, there is shown the basic systems required to provide an embodiment of the present invention, including a vehicle autonomous mission system 20 which provides decision making outputs 40 to a vehicle control system 60. The vehicle autonomous mission system 20 is fed with position data 10 for any personnel involved in a given mission. To provide a safety element, the position data 10 is simultaneously fed to a safety system 30 which is separate to the autonomous mission system 20 and which can send a safety override signal 50 to the vehicle control system 60 if it determines that the position data 10 meets given safety criterion.

The position data is, in this embodiment, GPS position data for the vehicle 100 and also for any personnel 130 in the theatre of operation of the vehicle 100. In this embodiment, the position data is supplied by handheld units having GPS positioning devices and which can transmit data to the vehicle 100 that the personnel 130 carry on their person. The vehicle is similarly equipped with a GPS positioning device.

It is conceivable to use alternatives to handheld devices using GPS positioning and transmitting this data to the vehicle, such as other positioning systems or by deriving the positions of personnel using sensors on the vehicle.

The autonomous mission system 20 receives orders from a remote or local operator and translates these orders into commands to operate the vehicle to carry out said orders.

Vehicle control system 60 receives the commands from the autonomous mission system 20 and translates these commands into simpler commands for the components of the vehicle, for example co-ordinating the steering, throttle and gears to operate in conjunction to make the vehicle drive in a straight line.

There is a problem with using GPS in a single-source navigation system like the one described above as there are invariably errors in the measurements of the GPS positions of not only the vehicle but also the personnel, which compounds the error in the distance between the vehicle and each of the personnel. Taking into account stopping distance in addition to this error in distance results in a large exclusion zone around the vehicle which the autonomous mission system must attempt to keep personnel outside, for fear that the errors mean that the vehicle and person are in danger of collision.

As a consequence, the safety system 30 is employed to reduce the risk of a collision between vehicle and personnel where personnel stray into this hazard zone.

The safety system uses several criterion to determine the level of risk to personnel from the vehicle, including whether the vehicle is heading in the direction of personnel or whether the relevant personnel are located away from the direction of travel of the vehicle, even taking into account errors in location. If the safety system determines that there is risk to personnel potentially in the direction of travel of the vehicle then a safety override signal is sent to the vehicle control system to apply a speed profile or, ultimately, stop the vehicle.

The are several mechanisms available for applying speed profile(s) to the vehicle control system including restricting the use gears to the lower or lowest gearing; applying the vehicle brakes; or applying a speed limit to the vehicle.

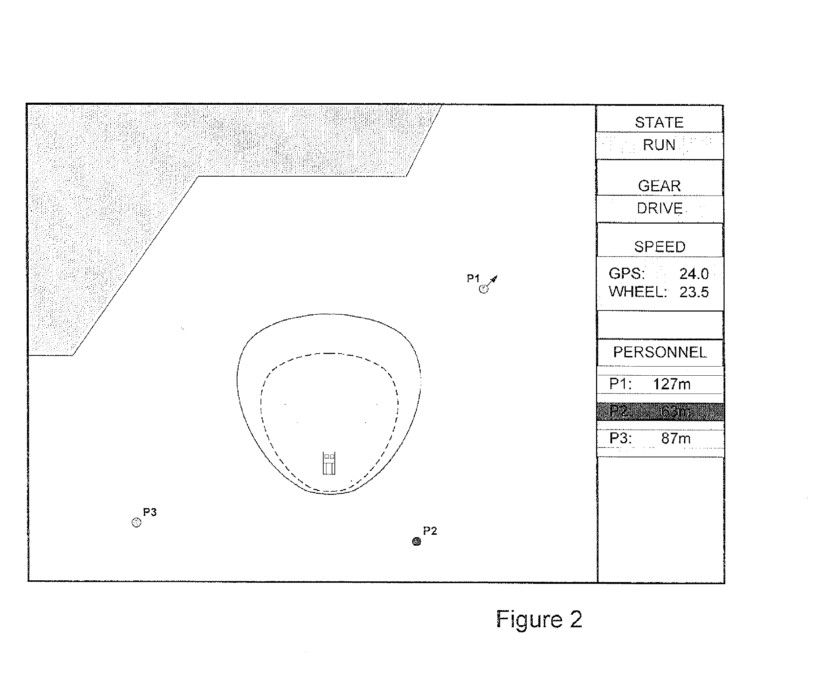

Referring now to Figure 2, it is possible to illustrate how the above embodiment of the present invention would operate the safety system described above.

The vehicle 100 is shown with two zones surrounding it, a GPS error zone 110 (dashed line) and the safety exclusion zone 120 (solid line). Surrounding the vehicle 100 are three personnel 130.

The autonomous mission system 20, when processing an order to, for example, follow one of the personnel 130, would plot a course to act accordingly, following at a safe distance from the person 130 it is meant to follow. If another of the personnel 130 is also moving, and happens to be moving closer to the vehicle 100 then the safety system 30 will trigger once a person 130 is within a outer perimeter distance from the vehicle 100.

The first stage of the safety system is to apply a lower speed profile to the vehicle 100 through the application of any or a combination of: shifting the gears down to a slower speed gear; applying the brakes to bring down the speed of the vehicle; and/or applying a speed limit to the vehicle that is more appropriate to a vehicle travelling in proximity to humans.

If the person 130 continues to get closer to the vehicle, or vice versa, then the safety system applies one or more further stages of lower speed profiles in iteration until the vehicle is deemed too close to a person 130 and the vehicle autonomous management system is overridden to order the vehicle control system to stop the vehicle.

Once the person has moved away from the vehicle to a suitable distance, the lowest speed profile can be re-applied to the vehicle control system and the vehicle autonomous management system can be handed back control of the vehicle from the safety system. As the vehicle distances itself from the person 130, so the speed profiles can be stepped through up to the maximum speed profile to allow orders to be executed by the vehicle autonomous management system at full speed.

If, however, the vehicle strays too close to personnel 130 then lower speed profiles would be re-applied as above.

It should be noted that the above described vehicle could be able to be driven manually as well as able to drive autonomously.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method for avoiding collisions between a vehicle and personnel comprising the steps of:
determining the locations of personnel within a predetermined range of said vehicle;
determining the proximity to said vehicle of said personnel;
applying a speed profile to said vehicle for reducing the speed of the vehicle or stopping the vehicle.

2. A method for avoiding collisions between a vehicle and personnel according to claim 1 wherein determining the locations of personnel within a predetermined range of said vehicle is performed using GPS (or similar) co-ordinates.

3. A method for avoiding collisions between a vehicle and personnel according to any of claims 1 and 2 wherein the personnel carry hand held units that relay respective position data to said vehicle.

4. A method for avoiding collisions between a vehicle and personnel according to any previous claim wherein the proximity to said vehicle of said personnel at which a speed profile is applied is biased such that a speed profile is applied sooner if personnel are in the direction of travel of said vehicle.

5. A method for avoiding collisions between a vehicle and personnel according to any previous claim wherein the vehicle is unmanned.

6. A safety system for a vehicle comprising:
a vehicle control system; and
a safety system; wherein
vehicle position data and personnel position data is provided to the safety system; and
if the vehicle position data and personnel position data are determined by the safety system to indicate that said vehicle is in close proximity to personnel, the safety system applies a speed profile to the vehicle control system causing the vehicle to reduce speed or stop.

7. A safety system according to claim 6, further comprising a vehicle autonomous mission system which receives position data and outputs decision making data to the vehicle control system.

8. A safety system according to any of claims 6 and 7, wherein the personnel carry hand held units that relay respective position data to said safety system.

9. A safety system according to any of claims 6 to 8, wherein the vehicle position data and personnel position data is in the form of GPS (or similar) co-ordinates.

10. A safety system according to any of claims 6 to 9, wherein the proximity to said vehicle of said personnel at which a speed profile is applied is biased such that a speed profile is applied sooner if personnel are in the direction of travel of said vehicle.
